# EUROPÄISCHE PATENTSCHRIFT

(11) **EP 4 193 818 B1**
(45) Veröffentlichungstag und Bekanntmachung des Hinweises auf die Patenterteilung: **17.12.2025**
(21) Anmeldenummer: 22020240.2
(22) Anmeldetag: 26.05.2022
(51) Int. Cl.: A01B 51/02, A01B 49/02, A01G 25/09, E01C 19/15, E01C 23/082

(54) **VORRICHTUNG ZUR BEARBEITUNG EINES REITPLATZBODENS**
DEVICE FOR PROCESSING THE GROUND OF A RIDING AREA
DISPOSITIF DE TRAITEMENT D'UN SOL D'UN TERRAIN D'ÉQUITATION

(30) Priorität: 28.05.2021 AT 5010921 U
(43) Veröffentlichungstag der Anmeldung: 14.06.2023
(73) Patentinhaber: Schmidt, Caroline, 2340 Mödling (AT)
(72) Erfinder: Schmidt, Caroline, 2340 Mödling (AT)
(74) Vertreter: Speringer, Markus

(56) Entgegenhaltungen:
- EP-A1- 3 772 266
- WO-A1-97/15180
- DE-A1- 102017 007 265
- DE-B4- 102014 118 259
- DE-U1- 202015 008 699

## Beschreibung

Die Erfindung betrifft eine Vorrichtung zur Bearbeitung eines Reitplatzbodens gemäß dem Obergriff des unabhängigen Anspruchs.

Gattungsgemäße Vorrichtungen, insbesondere sogenannte Reitplatzplaner, sind in unterschiedlichen Ausführungen bekannt und publiziert. In der Regel umfassen Reitplatzplaner ein Fahrgestell, das von einem Fahrzeug wie beispielsweise von einem Traktor gezogen werden kann. Ein herkömmlicher Reitplatzplaner umfasst beispielsweise mehrere in einer Reihe angeordnete Federzinken und eine diesen Federzinken nachgeordnete Nachlaufwalze. Die Federzinken sind dazu eingerichtet, den Boden aufzulockern und zu durchmischen. Die nachgeordnete Walze glättet den Boden und verdichtet ihn. Herkömmliche Reitplatzplaner weisen z.B. eine Breite von bis zu 2m auf. Um nun einen gesamten Reitplatz zu bearbeiten, wird das Gerät von einem Traktor in Schlangenlinien über den Reitplatz gezogen, bis die gesamte Fläche abgefahren ist. Bei mehrmaliger Anwendung kommt es zu dem Effekt, dass das Bodenmaterial des Reitplatzes, also in der Regel Sand bzw. Sand mit Zuschlagstoffen, an den Rand des Reitplatzes geschoben wird. Diese ungleichmäßige Verteilung muss dann meist händisch behoben werden. Insgesamt ergibt sich dadurch ein verhältnismäßig hoher Zeitaufwand, um einen Reitplatz in ausreichender Qualität zu bearbeiten.

Auch die Verwendung eines Traktors bringt einige Nachteile mit sich. So führt das häufige Befahren des Reitplatzbodens mit einem Traktor zu einem raschen Verschleiß des Bodenmaterials. Zudem emittiert ein Traktor Abgase, die insbesondere in Reithallen vermieden werden sollen.

Die DE 102017007265 A1 zeigt eine selbstfahrende Arbeitsmaschine für die Landwirtschaft. Diese weist mehrere Kettenantriebe sowie einen Tragrahmen auf, welcher sich beispielsweise auch über die gesamte Breite eines Feldes bzw. Reitplatzes erstrecken kann. Verschiedene Gerätschaften können zur Bodenbearbeitung an der Tragstruktur fixiert werden. Auch bei dieser Vorrichtung kommt es aufgrund des hohen Gewichts und der Kettenantriebe zumindest in den Randbereichen zu einer hohen Bodenverdichtung. Ferner sind hintereinander angeordnete Bearbeitungsgeräte jeweils nur in eine Richtung zu verwenden, wonach die Arbeitsmaschine am Ende des Feldes gewendet werden muss. Dies erfordert aufgrund der Breite der Tragstruktur einen hohen Platzbedarf und eine derartige Vorrichtung wäre daher beispielsweise für den Einsatz in einer Reithalle ungeeignet.

Die WO 97/15180 zeigt eine entlang eines Reitplatzes verfahrbare Vorrichtung mit quer zur Fahrtrichtung bewegbaren Zinken zur Bodenbearbeitung sowie einer Bewässerungseinrichtung.

Die EP 3772266 A1 zeigt eine Bearbeitungsvorrichtung, welche mit einem Zugfahrzeug koppelbar ist. Die DE 102014118259 B4 zeigt eine selbstfahrende Vorrichtung zum teilweisen bearbeiten einer Fläche, was ebenfalls einer Bearbeitung mit einem Zugfahrzeug gleichkommt. Die DE 202015008699 U1 offenbart eine entlang einer Rasenfläche verfahrbare Vorrichtung, welche Einrichtungen zur Beleuchtung und/oder Bewässerung der Rasenfläche aufweist.

Ferner müssen Reitplätze in der Regel bewässert werden. Diese Bewässerung geschieht meist von Hand, wodurch eine ungleichmäßige Bewässerung nicht vermieden werden kann. Auch hierdurch werden die Qualität und die Gleichmäßigkeit des Reitplatzbodens beeinträchtigt.

Aufgabe der Erfindung ist es nun, die Nachteile des Standes der Technik zu überwinden und insbesondere eine Vorrichtung zur Bearbeitung eines Reitplatzbodens zu schaffen, die trotz effizienter Arbeitsweise eine qualitativ hochwertige Bearbeitung des Reitplatzbodens ermöglicht.

Die Erfindung betrifft eine Vorrichtung zur Bearbeitung eines Reitplatzbodens, mit einer sich über die gesamte Breite eines Reitplatzes erstreckenden Bearbeitungsvorrichtung, welche ein Traggestell aufweist, das sich über die gesamte Breite (2) des Reitplatzes (3) erstreckt, und mit einer Bewegungsvorrichtung, die zur wahlweisen Bewegung der Bearbeitungsvorrichtung entlang zweier entgegengesetzter Bearbeitungsrichtungen eingerichtet ist, wobei die Bearbeitungsvorrichtung mindestens eine sich bevorzugt über die gesamte Breite der Bearbeitungsvorrichtung erstreckende am Traggestell angebrachte Zinkenanordnung zum Lockern des Reitplatzbodens und mindestens eine sich bevorzugt über die gesamte Breite der Bearbeitungsvorrichtung erstreckende am Traggestell angebrachte Walzenanordnung zum Glätten und/oder Andrücken des Reitplatzbodens aufweist, wobei die Bewegungsvorrichtung beidseitig der Breite des Reitplatzes ortsfest angeordnete Führungsschienen zur seitlichen Führung und insbesondere zur Parallelführung der Bearbeitungsvorrichtung aufweist, wobei die Führungsschienen die Bearbeitungsvorrichtung über die gesamte Länge des Reitplatzes führen, und wobei ein Verstellmechanismus vorgesehen ist, der die Walzenanordnung in beiden Bearbeitungsrichtungen der Zinkenanordnung nachordnet. Dadurch muss die Vorrichtung nicht gewendet werden und kann schnell, effizient und mit geringem Platzbedarf einen Reitplatz in beide Richtungen bearbeiten.

Gegebenenfalls können mindestens eine Zinkenanordnung und zwei höhenverstellbare Walzenanordnungen vorgesehen sein, wobei der Verstellmechanismus je nach Bearbeitungsrichtung die der Zinkenanordnung nachgeordnete Walzenanordnung absenkt.

Gegebenenfalls können zwei Zinkenanordnungen und eine höhenverstellbare Walzenanordnung vorgesehen sein, wobei der Verstellmechanismus je nach Bearbeitungsrichtung die der Walzenanordnung nachgeordnete Zinkenanordnung abhebt und die der Walzenanordnung vorgeordnete Zinkenanordnung absenkt.

Gegebenenfalls können eine Zinkenanordnung und eine Walzenanordnung vorgesehen sein, wobei der Verstellmechanismus je nach Bearbeitungsrichtung die Walzenanordnung hinter der Zinkenanordnung absenkt.

Gegebenenfalls können eine Zinkenanordnung und eine Walzenanordnung vorgesehen sein, wobei der Verstellmechanismus je nach Bearbeitungsrichtung die Zinkenanordnung vor der Walzenanordnung absenkt.

Gegebenenfalls ist vorgesehen, dass die Bewegungsvorrichtung eine Antriebsvorrichtung zur Bewegung und insbesondere zur Parallelbewegung der Bearbeitungsvorrichtung entlang zweier entgegengesetzter Bearbeitungsrichtungen aufweist.

Gegebenenfalls ist vorgesehen, dass die Bewegungsvorrichtung dazu eingerichtet ist, die Bearbeitungsvorrichtung entlang zweier entgegengesetzter Bearbeitungsrichtungen über die gesamte Länge des Reitplatzes parallel hin und zurück zu bewegen.

Gegebenenfalls kann an der Bearbeitungsvorrichtung eine mitfahrende Bewässerungsvorrichtung vorgesehen sein, die dazu eingerichtet ist, den Reitplatz über dessen gesamte Breite zu bewässern.

Gegebenenfalls ist vorgesehen, dass die Bewässerungsvorrichtung auf jenen Bereich gerichtet ist, in dem die Zinkenanordnung auf den Reitplatzboden wirkt.

Gegebenenfalls ist vorgesehen, dass die Bewässerungsvorrichtung mindestens eine Zuführungsleitung umfasst.

Gegebenenfalls ist vorgesehen, dass die Zuführungsleitung entlang der Bearbeitungsrichtungen verläuft.

Gegebenenfalls ist vorgesehen, dass an der Zuführungsleitung mehrere Ventile angeordnet sind, die dazu eingerichtet, die Zuführungsleitung geschlossen zu halten und bei Bedarf zu öffnen.

Gegebenenfalls ist vorgesehen, dass die Bearbeitungsvorrichtung eine mitfahrende Abnahmeglocke zur Entnahme von Wasser aus der Zuführungsleitung aufweist. Gegebenenfalls ist vorgesehen, dass die Bewässerungsvorrichtung derart ausgestaltet ist, dass die Ventile in jenem Bereich geöffnet sind, in dem die Abnahmeglocke angeordnet ist.

Gegebenenfalls ist vorgesehen, dass die Ventile insbesondere durch die Abnahmeglocke geöffnet werden.

Gegebenenfalls ist vorgesehen, dass die Bearbeitungsvorrichtung über mindestens ein am Reitplatzboden abrollendes Laufrad abgestützt ist, wobei das Laufrad gegebenenfalls durch die Walzenanordnung gebildet ist.

Gegebenenfalls ist vorgesehen, dass die Bewegungsvorrichtung und insbesondere deren Antriebsvorrichtung einen an der Bearbeitungsvorrichtung angreifenden Seilzug umfasst.

Gegebenenfalls ist vorgesehen, dass die Bewegungsvorrichtung und insbesondere deren Antriebsvorrichtung einen ortsfest angeordneten Antrieb wie insbesondere einen Elektromotor oder einen Hydraulikantrieb umfasst.

Gegebenenfalls ist vorgesehen, dass an dem Traggestell neben der Zinkenanordnung und der Walzenanordnung auch der Verstellmechanismus, die Bewässerungsvorrichtung und/oder der Seilzug angebracht sind.

Durch die Vorrichtung kann der gesamte Reitplatz bzw. Reitplatzboden bevorzugt in einem einzigen Arbeitsgang bearbeitet werden. Hierzu erstreckt sich die Bearbeitungsvorrichtung über die gesamte Breite des Reitplatzes. Durch die Bewegungsvorrichtung kann die Bearbeitungsvorrichtung entlang der gesamten Länge des Reitplatzes bewegt werden.

Um zu verhindern, dass das Material des Reitplatzbodens bei mehrmaliger Bearbeitung durch die Bearbeitungsvorrichtung in eine Richtung geschoben wird und sich an einer Seite des Reitplatzes ansammelt, weist die Vorrichtung bevorzugt zwei Bearbeitungsrichtungen auf. Dadurch kann die Bearbeitungsvorrichtung den Reitplatzboden wahlweise oder abwechselnd in entgegengesetzte Bearbeitungsrichtungen bearbeiten. Dabei wird die Bearbeitungsvorrichtung nicht um 180° geschwenkt, wie dies beispielsweise bei herkömmlichen von Traktoren in Schlangenlinien gezogenen Reitplatzplanern der Fall ist, sondern die Bearbeitungsrichtung der Bearbeitungsvorrichtung wird umgekehrt.

Da die Walzenanordnung für eine optimale Wirkung der Zinkenanordnung nachgeordnet sein sollte, ist ein Verstellmechanismus vorgesehen. Dieser Verstellmechanismus ist dazu geeignet und/oder eingerichtet, je nach Bearbeitungsrichtung die Walzenanordnung hinter der Zinkenanordnung zum Einsatz zu bringen.

Zur Umsetzung dieser Funktionalität sind mehrere Konzepte denkbar. So können eine einzige Walzenanordnung und eine einzige Zinkenanordnung vorgesehen sein, wobei der Verstellmechanismus diese beiden Anordnungen je nach Bearbeitungsrichtung derart zueinander positioniert, dass die Walzenanordnung der Zinkenanordnung nachläuft. Gegebenenfalls können zwei Walzenanordnungen vorgesehen sein, die vor und nach der Zinkenanordnung angebracht sind. Der Verstellmechanismus kann bei dieser Ausführungsform die jeweils nachlaufende Walzenanordnung absenken und die vorlaufende Walzenanordnung anheben. Alternativ kann auch eine einzige Walzenanordnung vorgesehen sein, wobei entlang der Bearbeitungsrichtungen vorne und hinten jeweils eine Zinkenanordnung vorgesehen ist. Je nach Bewegungsvorrichtung wird die vordere Zinkenanordnung abgesenkt und die hintere Zinkenanordnung angehoben. Insbesondere wenn die Walzenanordnung zentral angeordnet ist, kann diese als Laufrad dienen, auf dem die Vorrichtung am Reitplatzboden abgestützt ist.

Zur gleichmäßigen Bewässerung des Reitplatzbodens kann die Vorrichtung eine Bewässerungsvorrichtung umfassen, die sich insbesondere über die gesamte Breite des Reitplatzes erstreckt und die bevorzugt ein Teil der Bearbeitungsvorrichtung ist. Beispielsweise kann die Bewässerungsvorrichtung entlang der Breite des Reitplatzes eine Vielzahl an Bewässerungsöffnungen umfassen, die zur Ausgabe von Wasser eingerichtet sind. Wird die Bearbeitungsvorrichtung entlang des Reitplatzes bewegt, so kann gleichzeitig eine Bewässerung des Reitplatzbodens durch die Bewässerungsvorrichtung erfolgen. Die Bewässerungsvorrichtung ist bevorzugt derart ausgestaltet, dass sie das Wasser im Wesentlichen gleichmäßig entlang der Breite des Reitplatzes ausgibt. Bevorzugt ist die Bewässerungsvorrichtung auf jenen Bereich gerichtet, in dem die Zinkenanordnung auf den Reitplatzboden wirkt. Durch diese Positionierung kann das Wasser bei der Lockerung des Reitplatzbodens und insbesondere bei der Durchmischung des Reitplatzbodens optimal eingebracht werden. Zudem kann durch die Ausgabe des Wassers die Staubbildung verringert werden.

Die Bewässerungsvorrichtung ist insbesondere dann auf den Bereich der Zinkenanordnung gerichtet, wenn das Wasser im Bereich der Zinkenanordnung, unmittelbar danach und/oder unmittelbar davor aufgebracht bzw. eingebracht wird.

Zur Bewegung der Bearbeitungsvorrichtung ist eine Bewegungsvorrichtung vorgesehen. Diese umfasst bevorzugt zwei beidseitig des Reitplatzes angeordnete Führungsschienen. An diesen Führungsschienen kann die Bearbeitungsvorrichtung beidseitig geführt sein. Die Führung ist insbesondere als Parallelführung ausgebildet. Zur Bewegung der Bearbeitungsvorrichtung entlang der beiden Bewegungsrichtungen ist eine Antriebsvorrichtung vorgesehen. Diese kann einen Antrieb wie beispielsweise einen elektrischen Antrieb oder einen hydraulischen Antrieb umfassen. Der Antrieb ist bevorzugt ortsfest montiert.

Insbesondere um eine Bewegung der Bearbeitungsvorrichtung durch einen ortsfest angeordneten Antrieb zu ermöglichen, kann ein Seilzug vorgesehen sein, der an der Bearbeitungsvorrichtung oder an dessen Traggestell angreift.

Bevorzugt ist ein Seilzug vorgesehen, der als endloser Seilzug bzw. als rundgeführter Seilzug ausgebildet ist, sodass die Bearbeitungsvorrichtung von dem Antrieb in beide Bearbeitungsrichtungen bewegt werden kann. Gegebenenfalls umfasst der Seilzug mehrere Seilzüge, die nebeneinander bzw. parallel zueinander an der Bearbeitungsvorrichtung angreifen. Gegebenenfalls sind mehrere Antriebe vorgesehen, die durch herkömmliche Mittel miteinander synchronisiert bzw. gekoppelt sind.

Alternativ kann die Bearbeitungsvorrichtung selbstfahrend ausgebildet sein und beispielsweise mindestens ein angetriebenes Antriebsrad umfassen, das am Reitplatzboden, an der Führungsschiene oder an einer Zahnstange abrollt, um die Bearbeitungsvorrichtung wahlweise in eine der Bearbeitungsrichtungen zu bewegen.

Gegebenenfalls ist in allen Ausführungsformen vorgesehen, dass die Walzenanordnung als Gitterwalzenanordnung ausgebildet ist, die eine oder mehrere Gitterwalzen umfasst. Gitterwalzen dienen einerseits der Glättung des Reitplatzbodens, hinterlassen jedoch eine aufgeraute Oberfläche des geglätteten Reitplatzbodens. Insbesondere kann durch Gitterwalzen auch eine ausreichende Verfestigung des Bodens erzielt werden.

Alternativ oder zusätzlich können Gummiwalzen oder Krümlerwalzen eingesetzt werden.

Die Zinkenanordnung umfasst gegebenenfalls Striegelzinken, Federzinken und/oder andere bekannte Zinkenarten zur Bearbeitung von Reitplatzböden.

Bevorzugt weist die Zinkenanordnung in allen Ausführungsformen mehrere Zinken auf, die im Wesentlichen in einer quer zur Bearbeitungsrichtung verlaufenden Reihe angeordnet sind. Gegebenenfalls können die Zinken auch in mehreren Reihen angeordnet sein. Bevorzugt erstreckt sich die Zinkenanordnung über die gesamte Breite der Bearbeitungsvorrichtung.

Gegebenenfalls ist der Verstellmechanismus derart ausgestaltet, dass die Bearbeitungsvorrichtung durch Ändern der Bearbeitungsrichtung selbsttätig in jene Stellung gebracht wird, in der die Walzenanordnung der Zinkenanordnung nachläuft. Beispielsweise kann der Verstellmechanismus dadurch gebildet sein, dass die Bearbeitungsvorrichtung von einer Stellung in die andere kippt oder gekippt wird, wenn sich die Bearbeitungsrichtung ändert. Alternativ kann auch ein Kippantrieb vorgesehen sein, der die Bearbeitungsvorrichtung von einer Stellung in die andere kippt. Beispielsweise kann die Zinkenanordnung oder die Walzenanordnung auf einem Hebel angebracht sein, der je nach Bearbeitungsrichtung verschwenkt wird, sodass die Walzenanordnung der Zinkenanordnung in beiden Bearbeitungsrichtungen nachläuft.

Bevorzugt ist vorgesehen, dass die seitlichen Führungsschienen verkleidet sind, sodass die Sicherheit der Vorrichtung verbessert ist. Diese Verkleidung kann beispielsweise begehbar sein und/oder flexible Schürzen wie beispielsweise Gummilamellen oder Borstenleisten umfassen.

Die Vorrichtung ist bevorzugt zur Bearbeitung eines Innen- und/oder Außenbodens geeignet.

Bei dem Reitplatzboden handelt es sich bevorzugt um einen Sandboden für Pferdesport, gegebenenfalls mit Zuschlagstoffen wie Vlies.

In weiterer Folge werden **exemplarische Ausführungsformen** und Komponenten möglicher Vorrichtungen zur Bearbeitung eines Reitplatzes beschrieben.

Bevorzugt ist die Vorrichtung eine ortsfeste Anlage mit beweglicher Bearbeitungsvorrichtung. Im Vergleich zu den bekannten Methoden der Reitbodenpflege kann die Vorrichtung ein integrierter Reitplatzplaner sein, dessen Bearbeitungsvorrichtung sich über die gesamte Breite der kurzen Bahnseite des Reitplatzes erstreckt und die gesamte lange Bahnseite in einem Arbeitsgang auflockert, bewässert, ebnet und/oder festigt. Hierbei kann die Bearbeitungsvorrichtung automatisch bzw. gesteuert hin und retour verfahren werden.

Dabei wird das System beispielsweise von hydraulischen Industrieseilwinden für horizontalen Lastzug angetrieben. Je nach Länge und Breite des Reitplatzes ergibt sich der Bedarf für die entsprechende Leistung und die Anzahl der benötigten Seilwinden. Damit die Vorrichtung in beide Bearbeitungsrichtungen gleich effizient arbeitet, befinden sich in Bearbeitungsrichtung gesehen vorne und hinten bevorzugt gleiche Komponenten, jedoch spiegelverkehrt montiert. Je nach Bearbeitungsrichtung kommt entweder die hintere oder die vordere Gerätschaft zum Einsatz. Da die Zinkenanordnung in beide Richtungen gleichmäßig arbeitet, wird das "Verschleppen" des Reitbodens in eine Richtung verhindert. Beim Richtungswechsel nach der ersten langen Seite kippt der Reitplatzplaner gegebenenfalls auf die andere Seite und arbeitet nun mit den spiegelverkehrt montierten Komponenten in die entgegengesetzte Richtung.

Um eine stabile Seilführung und damit Geräteführung zu gewährleisten, können um den Reitplatz begehbare Verkleidungselemente verbaut werden. Der Hohlraum in den Verkleidungselementen kann einen Platz für Führungsschienen und/oder Führungsrollen und eine Wasserleitung bzw. eine Zuführungsleitung bieten.

Die Bearbeitungsvorrichtung wird beispielsweise einmal in jede Längsrichtung gezogen und schließlich wieder in der Ausgangsposition geparkt. Dafür kann ein Parkgehäuse bzw. ein Geräteunterstand vorgesehen sein, in dem die Bearbeitungsvorrichtung mit dem Seilantriebssystem und den nötigen Anschlüssen untergebracht ist. Das Gehäuse kann die Bearbeitungsvorrichtung vor Staub, Schmutz und Umwelteinflüssen schützen und Zugang zur technischen Wartung ermöglichen.

Gleichzeitig kann die Dachseite des Parkgehäuses bzw. Geräteunterstands als Tribüne verwendet werden.

Eine **Ausführungsform** einer Bearbeitungsvorrichtung kann beispielsweise wie folgt ausgebildet sein:
Die Bearbeitungsvorrichtung umfasst eine Mittelachse mit Laufrädern, Trägern für die Zinkenanordnung und den seitlichen Kupplungsstücken. Zu beiden Seiten der Achse, also vorne und hinten, befindet sich jeweils eine Zinkenanordnung mit Federzinken in Y-Form. Ihre Y-Form kann eine gründliche Bodenauflockerung bewirken. Auf den Zinkenanordnungen sind jeweils zwischen den Federzinken Drucksprühdüsen bzw.
eine Sprühleiste montiert. Sie sorgen für die zeitgleiche Bodenbefeuchtung und Staubprävention. Ein frostsicher ausgeführtes Bewässerungssystem ermöglicht das Bewässern im Winter. Hinter der Zinkenanordnung ebnet eine Drahtwalze den aufgelockerten Boden zu einer gleichmäßig festen Fläche.

Eine **weitere Ausführungsform** einer Bearbeitungsvorrichtung kann beispielsweise wie folgt ausgebildet sein:
Die Bearbeitungsvorrichtung umfasst eine einzige selbstgestützte Drahtwalze auf einer zentralen Achse. Die Zinkenanordnungen verlaufen von den Seitenbereichen zumindest abschnittsweise schräg nach vorne. Die schräg verlaufenden Zinkenanordnungen sind insofern vorteilhaft, da die Zugkraft von den seitlichen Führungsseilen zur Mitte der Zinkenanordnung hin abnimmt. So ist in der Regel der Widerstand der Zinken im Boden durch den übertragenen Druck mittig am geringsten.

An den seitlichen Enden der Zinkenanordnungen können in allen Ausführungsformen Schaufelblätter angebracht sein, die das nach außen getretene Material des Reitplatzbodens wieder nach innen schaufeln.

Die Anordnung der Federzinken erfordert gegebenenfalls, dass die Arbeitsgeräte auf der linken Seite der Zinkenanordnung in Richtung links arbeiten und die auf der rechten Seite nach rechts.

Gegebenenfalls umfasst die Vorrichtung Verkleidungselemente, insbesondere Bodenelemente. Diese definieren gegebenenfalls den Rahmen für die zu bearbeitende Fläche und können nach dem Bausteinprinzip auf jeder benötigten Reitplatzgröße verlegt werden. Jedes Bodenelement kann beispielsweise eine Größe von 50 cm Breite x 100 cm Länge x 25 cm Höhe haben. Die Bodenelemente können sich fest im Boden verankern lassen, und/oder kuppelbar sein wie ein Steckwürfelsystem, und/oder Stabilität und Belastung gewährleisten, selbst wenn ein Pferd darauf tritt, und/oder austauschbar sein, falls es einmal zu einer Beschädigung kommen sollte, und/oder für den Innen- und Außenbereich geeignet sein, daher UV- und witterungsbeständig sein, und/oder im Gesamtumfang einen Reitplatz mit international genormten Dimensionen umranden (i.d.R. 60 m x 20 m/40 m x 20 m) bzw. auf jede bestehende Platzgröße zum vollen Meter verlegt werden können, und/oder an der innenliegenden Seite einen geeigneten Hohlraum aufweisen, der groß genug ist, und/oder um ein Führungssystem und Leitungen zu integrieren, in der Höhe wie ein "Gehsteig" um den Reitplatz verlaufen und in Reithallen Zugang zu den Notausgängen gewährleisten, und/oder schmal sein, um eine bestehende Reithalle nachrüsten zu können, und/oder mit der herkömmlichen Bande mit geringstmöglichem Reitplatzverlust austauschbar sein, und/oder mit einer Gummilamelle und einer Borstenleiste als Schutzvorrichtung an der Innenseite versehen sein, um der Verletzungsgefahr vorzubeugen und/oder das dahinterliegende Führungssystem vor eintretendem Bodenbelag zu schützen.

Das Material, aus dem die Bestandteile der Bodenelemente gefertigt sind, kann beispielsweise aus Recyclingmaterial bestehen. Die Bodenelemente bieten noch weitere Vorteile. Durch die Begehbarkeit (wie ein Gehsteig) können unterrichtende Personen, statt sich am Reitplatz zu befinden, den "Gehsteig" benützen und der Reitboden wird nicht mehr zusammengetreten. Die Bodenelemente lassen sich gegebenenfalls mit verschiedenen Bodenbelägen ausstatten. Die Bodenelemente sind mit weiterem Zubehör wie Bandenelementen, Buchstaben oder Aufstiegshilfen ergänzbar. Aufgrund der unterschiedlichen Gegebenheiten der Reitsportanlagen sind verschiedene Formen von Bodenelementen möglich, um die Vorrichtung jedem Reitplatz individuell anzupassen. Vorteilhaft für die langjährige Haltbarkeit der Bodenelemente ist die Herstellung aus robusten, witterungsbeständigen, schlagfesten und formstabilen Materialien wie armierter Beton, Kunststoff, Betonkomposit oder Faserbeton. Die aneinandergereihten Teile (aller Materialien) sollten sowohl miteinander, als auch mit dem Untergrund verbunden werden, um Verwindungen zu vermeiden. Bei einem festen, stabilen Untergrund kann auf ein Fundament verzichtet werden.

Gegebenenfalls umfasst die Vorrichtung eine Seilführung. Damit die Bearbeitungsvorrichtung bei Belastung und Widerstand seine gerade Laufrichtung behält, wird bevorzugt durch den Rahmen der Bodenelemente die Seilführung geleitet. Je nach benötigter Zug- und Gegenzugkraft sind dementsprechend leistungsstarke Seilwinden zu verbauen. Bei 2 verbauten Seilwinden an nur einer kurzen Seite verläuft je ein Seil bevorzugt entlang einer langen Bahnseite geschlossen im Kreis. Bei vier verbauten Seilwinden befinden sich beispielsweise an jeder kurzen Bahnseite zwei Seilwinden und die Zugkraft wird auf die Seile links und rechts der langen Bahnseite übertragen. Ist eine Bahnlänge fertig geplant, erfolgt ein Richtungswechsel und die Seilwinden der anderen kurzen Bahnseite können übernehmen.

Gegebenenfalls umfasst der Vertstellmechanismus ein winkelig ausgebildetes Traggestell, das je nach Bearbeitungsrichtung kippen kann. Der Winkel, in dem die Zinkenanordnungen moniert sind, kann etwa 120° betragen, sodass jeweils nur eine Zinkenanordnung den Boden bearbeitet, während die andere Zinkenanordnung in die Luft ragt.

Nachdem die Bearbeitungsvorrichtung eine definierte, programmierte Bahnlänge zurückgelegt hat, stoppt eine Steuerung die Seilwinden, und steuert gegebenenfalls mittels eines Elektromotors eine Verkippung des Verstellmechanismus bzw. des winkelig ausgebildeten Traggestells, um die Bearbeitungsvorrichtung in die andere Bearbeitungsrichtung zu bewegen.

Vorteilhaft kann sein, wenn die Vorrichtung von einer Person einfach durch Betätigung von Schaltern bedienbar ist.

Es kann beispielsweise je Durchlauf gewählt werden, ob und wieviel Bewässerung benötigt wird.

Programmbeispiele:
- Bodenplanung + Bewässerung hin und retour
- Bodenplanung + Bewässerung hin, Bodenplanung retour
- Bodenplanung 3 x hin und retour

Der klare Vorteil liegt darin, dass unverzüglich nach dem Reiten der Boden wieder aufgelockert wird und so auch Zeit zum "Atmen" hat. Gleichzeitig hinterlässt man dem nachfolgenden Reiter einen frisch geplanten Boden. Die Lebensdauer des Reitbodens wird deutlich erhöht. Das Material des Reitbodens wird geschont und somit werden Ressourcen gespart. Durch eine integrierte Bewässerung kommt es zu keiner Vermorschung der Holzbanden.

Gegebenenfalls umfasst die Vorrichtung eine Bewässerungsvorrichtung. Die Wassereinspeisung für die Bearbeitungsvorrichtung kann beispielsweise über ein oder zwei Wasserrohre, insbesondere Zuführungsleitungen, an beiden Längsseiten des Reitplatzes erfolgen, deren Enden geschlossen sind. An den Wasserrohren sind beispielsweise fortlaufend Ventile in regelmäßigen Abständen angebracht, von denen die Bearbeitungsvorrichtung das Wasser beidseitig durch Wasserdüsen entnimmt. Die Ventile am Wasserrohr sind beispielsweise in einer Ventilschiene platziert und innerseitig durch eine Federleiste verschlossen. Gekoppelt mit der Fortbewegung des Reitplatzplaners öffnet ein darüber gleitender Schlitten die Ventile. Dieses Schlittengehäuse bzw. die Abnahmeglocke kann eine bestimmte Länge aufweisen, damit die Wasseraufnahme über zumindest drei bis fünf geöffnete Ventile ermöglicht wird. Das Volumen der Wasserdüse sollte der Durchflussmenge für das benötigte Sprühwasser und dem Leitungsdurchmesser der Sprühleiste angepasst sein. Jedes Wasserrohr bzw. jede Zuführungsleitung ist ein gegebenenfalls geschlossenes System, das durch einen Wasserzulauf bis zur Gänze gefüllt wird (ähnlich einem Reservoir). Während des Bewässerungsvorgangs werden die Wasserrohre bevorzugt ständig mit Wasser befüllt, sodass das Volumen der Rohre immer gefüllt ist. Der aufkommende Wasserdruck im befüllten Rohr sorgt zusätzlich dafür, dass die Federventile von innen nach außen schließen. Sobald die Abnahmeglocke über die Ventile gleitet, drückt der Boden der Abnahmeglocke die Ventilkappe nach innen und die Wassereinspeisung für die Sprühleisten wird aktiviert. Sobald die Abnahmeglocke ein Ventil passiert hat, schließt das Ventil anschließend wieder selbsttätig. Um einen ungewollten Wasseraustritt zu vermeiden, kann die Abnahmeglocke auf der Ventilschiene
und bei der Auslassmuffe (am Kopf der Wasserdüse) mit entsprechendem Material abgedichtet sein. Gleiches gilt gegebenenfalls für die Ventilkappen und die Rohrverbindungen. Die Wasserrohre lassen sich beispielsweise durch ein Stecksystem in beliebige Längen bringen und sind durch ihre gleichbleibende Position gut isolierbar und beheizbar. Pro Wasserrohr/Ventilschiene kann mehr als eine Abnahmeglocke installiert werden. Im Vergleich zu einem Schlauchsystem liegt der Vorteil des Wasserrohres im Entfall eines langen Schlauches.

Die in unterschiedlichen Ausführungen erläuterte Bewässerungsvorrichtung ist zwar als Zusatz für die Bearbeitungsvorrichtung beschrieben, sie kann aber grundsätzlich auch alleine zur Bewässerung von Flächen wie beispielsweise Anbauflächen, Beeten, Feldern oder auch Sportplätzen eingesetzt werden. In diesem Fall können die Zinkenanordnung und/oder die Walzenanordnung entfallen, und die Vorrichtung ist eine Vorrichtung zur Bewässerung einer Fläche.

Gegebenenfalls umfasst die Vorrichtung ein Parkgehäuse, insbesondere einen Maschinenunterstand. Das Parkgehäuse ist gegebenenfalls die Beherbergung des Reitplatzplaners, des Antriebsmotors samt Seilwinden und der nötigen Anschlüsse. Von der Außenseite wird der Wartungszugang ermöglicht, an der Innenseite schützt gegebenenfalls ein elektrisch betriebenes Rolltor den Reitplatzplaner vor Schmutz und Witterung. Die Oberseite des Gehäuses kann gegebenenfalls als Zuschauertribüne verwendet werden.

In weiterer Folge wird die Erfindung anhand von schematischen Figuren und exemplarischen Ausführungsformen weiter beschrieben.
Fig. 1 zeigt eine schematische Ansicht einer Vorrichtung mit einer Bearbeitungsvorrichtung.
Fig. 2 zeigt eine Schrägansicht einer möglichen Ausführungsform einer Bearbeitungsvorrichtung.
Fig. 3 zeigt eine schematische Darstellung einer weiteren Ausführungsform einer Bearbeitungsvorrichtung und insbesondere auch Details zur Bewässerungsvorrichtung.

Die Fig. 4a und 4b zeigen zwei unterschiedliche Ausführungsformen möglicher Zinken.

Die Fig. 5a und 5b zeigen Details einer Ausführungsform der Verkleidung der Führungsschienen.

Wenn nicht anders angegeben, so entsprechen die Bezugszeichen der Figuren folgenden Komponenten: Reitplatzboden 1, Breite 2, Reitplatz 3, Bearbeitungsvorrichtung 4, Bewegungsvorrichtung 5, Bearbeitungsrichtungen 6, 7, Zinkenanordnung 8, Walzenanordnung 9, Verstellmechanismus 10, Führungsschiene 11, Länge 12, Antriebsvorrichtung 13, Bewässerungsvorrichtung 14, Laufrad 15, Seilzug 16, Antrieb 17, Traggestell 18, Verkleidung 19, Zinken 20, Geräteunterstand 21, Zuführungsleitung 22, Ventil 23, Abnahmeglocke 24, Schürze 25, Borstenleiste 26.

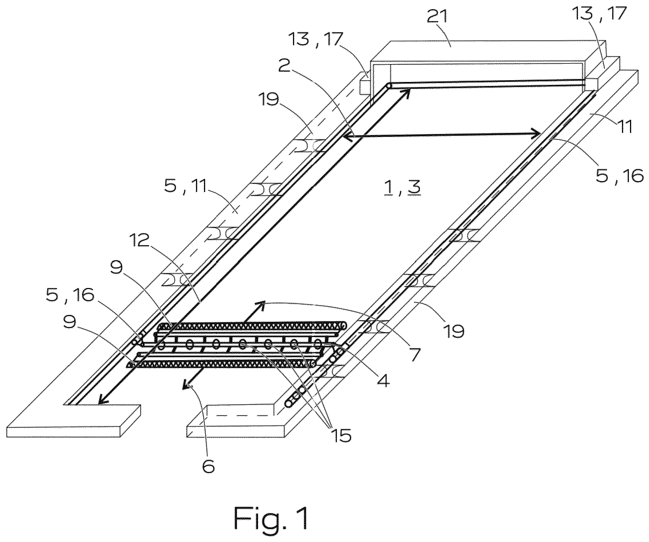

Fig. 1 zeigt eine schematische Schrägansicht einer möglichen Ausführungsform einer Vorrichtung zur Bearbeitung eines Reitplatzes 3 bzw. dessen Reitplatzbodens 1. Der Reitplatzboden 1 weist eine gewisse Breite 2 und Länge 12 auf. Zur Bearbeitung des Reitplatzbodens 1 ist eine Bearbeitungsvorrichtung 4 vorgesehen. Die Bearbeitungsvorrichtung 4 kann über eine Bewegungsvorrichtung 5 bewegt werden. Die Bearbeitungsvorrichtung 4 erstreckt sich über die gesamte Breite 2 des Reitplatzbodens 1. Durch die Bewegungsvorrichtung 5 kann die Bearbeitungsvorrichtung 4 entlang der gesamten Länge 12 des Reitplatzbodens 1 bewegt werden. Insbesondere wird die Bearbeitungsvorrichtung 4 durch die Bewegungsvorrichtung 5 parallel verschoben und kann von einer Seite zur anderen Seite des Reitplatzbodens 1 hin und her bewegt werden. Hierzu kann die Bewegungsvorrichtung 5 die Bearbeitungsvorrichtung 4 in unterschiedliche Bearbeitungsrichtungen 6, 7 bewegen. Die Bearbeitungsvorrichtung 4 kann den Reitplatzboden 1 in beide Bearbeitungsrichtungen 6, 7 bearbeiten.

Die Bewegungsvorrichtung 5 umfasst mindestens eine Antriebsvorrichtung 13 mit einem Antrieb 17. In der vorliegenden Ausführungsform ist der Antrieb 17 ortsfest angeordnet und wird dadurch nicht mit der Bearbeitungsvorrichtung 4 mitbewegt. Die Bewegungsvorrichtung 5, insbesondere deren Antriebsvorrichtung 13, umfasst in der vorliegenden Ausführungsform einen Seilzug 16, der an der Bearbeitungsvorrichtung 4 angreift, um diese in unterschiedliche Bearbeitungsrichtungen 6, 7 zu bewegen. Zur Führung der Bearbeitungsvorrichtung 4 umfasst die Bewegungsvorrichtung 5 in der vorliegenden Ausführungsform beidseitig des Reitplatzbodens 1 angeordnete Führungsschienen 11. Diese Führungsschienen 11 sind in dieser Darstellung der Einfachheit halber nicht im Detail dargestellt und bevorzugt durch eine Verkleidung 19 verkleidet. Diese Verkleidung 19 kann insbesondere begehbar ausgebildet sein und die Führungsschiene 11 bzw. den Seilzug 16 abdecken, sodass die Sicherheit der Vorrichtung verbessert ist.

Der Seilzug 16 ist bevorzugt als endloser Seilzug 16 bzw. als rundgeführter Seilzug 16 ausgebildet, sodass die Bearbeitungsvorrichtung 4 durch einen einzigen Antrieb 17 in unterschiedliche Bearbeitungsrichtungen 6, 7 bewegt werden kann.

An einer Seite des Reitplatzes 3 ist bevorzugt ein Geräteunterstand 21 vorgesehen. Die Bearbeitungsvorrichtung 4 kann in diesen Geräteunterstand 21 verfahren werden, wenn sie gerade nicht benötigt wird.

Zur Bearbeitung des Reitplatzbodens 1 des Reitplatzes 3 kann die Bearbeitungsvorrichtung 4 aus dem Geräteunterstand 21 gefahren werden. Hierzu wird der Antrieb 17 der Antriebsvorrichtung 13 betätigt, der über den Seilzug 16 auf die Bearbeitungsvorrichtung 4 wirkt. In weiterer Folge wird die Bearbeitungsvorrichtung 4 ans andere Ende des Reitplatzbodens 1 verfahren.

Bei der Bewegung der Bearbeitungsvorrichtung 4 entlang der ersten Bearbeitungsrichtung 6 kommt die Zinkenanordnung 8 in Eingriff mit dem Reitplatzboden 1, um den Reitplatzboden 1 aufzulockern und/oder aufzuwühlen. Die Zinkenanordnung 8 und deren Zinken 20 sind in der vorliegenden Darstellung der Fig. 1 aus Gründen der Vereinfachung nicht dargestellt. Ist der gesamte Reitplatz 3 durch die Bewegung der Bearbeitungsvorrichtung 4 entlang der ersten Bearbeitungsrichtung 6 bearbeitet, so kann die Bearbeitungsvorrichtung 4 gegebenenfalls in dieser Stellung belassen werden. Alternativ oder zusätzlich kann die Bearbeitungsvorrichtung 4 entlang der zweiten Bearbeitungsrichtung 7 unmittelbar nach dem ersten Bearbeitungsschritt oder zu einem späteren Zeitpunkt wieder zurückgefahren werden. Diese Stellung ist in der Fig. 1 dargestellt. Die in der zweiten Bearbeitungsrichtung 7 hinten bzw. nachlaufend angeordnete Walzenanordnung 9 ist hierbei auf den Reitplatzboden 1 gedrückt.

Die Bearbeitungsvorrichtung 4 umfasst in der vorliegenden Ausführungsform mehrere Laufräder 15, die am Reitplatzboden 1 abrollen, um die Bearbeitungsvorrichtung 4 am Reitplatz 3 abzustützen. Zusätzlich kann eine Abstützung in allen Ausführungsformen an den Führungsschienen 11 erfolgen.

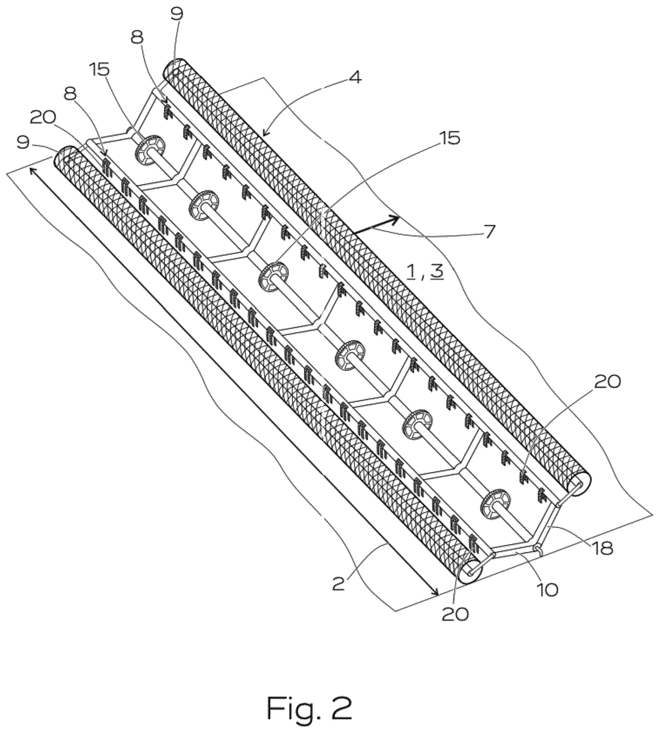

Fig. 2 zeigt eine schematische Schrägansicht einer Bearbeitungsvorrichtung 4, wie sie beispielsweise in der Stellung und der Vorrichtung der Fig. 1 eingesetzt sein kann. Die Bearbeitungsvorrichtung 4 wird exemplarisch entlang der Bearbeitungsrichtung 7 bewegt, wie in Fig. 1 dargestellt. Die Bearbeitungsvorrichtung 4 umfasst eine Zinkenanordnung 8 mit einer Vielzahl an Zinken 20. Insbesondere umfasst die Bearbeitungsvorrichtung 4 zwei Zinkenanordnungen 8, die jeweils eine Vielzahl an Zinken 20 aufweisen. Die Zinkenanordnungen 8 erstrecken sich bevorzugt über die gesamte Breite 2 des Reitplatzbodens 1 bzw. der Bearbeitungsvorrichtung 4, sodass der gesamte Reitplatzboden 1 bearbeitet werden kann. In Bearbeitungsrichtung 7 gesehen ist der in Eingriff befindlichen Zinkenanordnung 8 eine Walzenanordnung 9 nachgeordnet. In der vorliegenden Ausführungsform sind zwei Walzenanordnungen 9 vorgesehen. Zudem umfasst die Bearbeitungsvorrichtung 4 einen Verstellmechanismus 10. Dieser ist in der vorliegenden Ausführungsform als Kipprahmen ausgebildet. Wird die Bearbeitungsvorrichtung 4, wie dargestellt, in Bearbeitungsrichtung 7 gezogen, so verkippt der Rahmen derart, dass die Walzenanordnung 9 der Zinkenanordnung 8 nachgeordnet ist und dieser nachläuft. Wird die Bearbeitungsrichtung geändert, so verkippt der Verstellmechanismus 10 wiederum, um die andere Walzenanordnung 9 und die andere Zinkenanordnung 8 in Eingriff mit dem Reitplatzboden 1 zu bringen, sodass auch bei dieser Bearbeitungsrichtung 6 die Walzenanordnung 9 der Zinkenanordnung 8 nachläuft.

Die Bearbeitungsvorrichtung 4 umfasst mehrere Laufräder 15, die am Reitplatzboden 1 abrollen, um die Bearbeitungsvorrichtung 4 am Reitplatzboden 1 abzustützen.

Die Walzenanordnungen 9 sind als Gitterwalzen ausgebildet. Alternativ können diese Walzenanordnungen 9 jedoch auch als Gummiwalzenanordnungen oder andere übliche Walzenanordnungen ausgebildet sein. Die Bearbeitungsvorrichtung 4 umfasst ein Traggestell 18, an dem in diesem Fall alle maßgeblichen mitfahrenden Komponenten der Bearbeitungsvorrichtung 4 angebracht sind. Insbesondere sind an dem Traggestell 18 die Zinkenanordnung 8 und die Walzenanordnung 9 vorgesehen. Auch eine Achse zur Lagerung der Laufräder 15 ist bei dieser Ausführungsform an dem Traggestell 18 gelagert.

Die Zinken 20 der Zinkenanordnung 8 sind im Wesentlichen gleichmäßig entlang der Breite 2 der Bearbeitungsvorrichtung 4 verteilt. Durch diese Verteilung einer Vielzahl an Zinken 20 kann eine gleichmäßige Aufwühlung bzw. Durchmischung des Reitplatzbodens 1 erfolgen. Die nachlaufende Walzenanordnung 9 glättet bzw. planiert den durch die Zinken 20 aufgewühlten Reitplatzboden 1 und drückt ihn in ausreichendem Maße an. Durch die Ausgestaltung der Walzenanordnung 9 als Gitterwalze geschieht eine Aufrauhung des geglätteten Reitplatzbodens 1, was diesem weitere positive Eigenschaften verleiht.

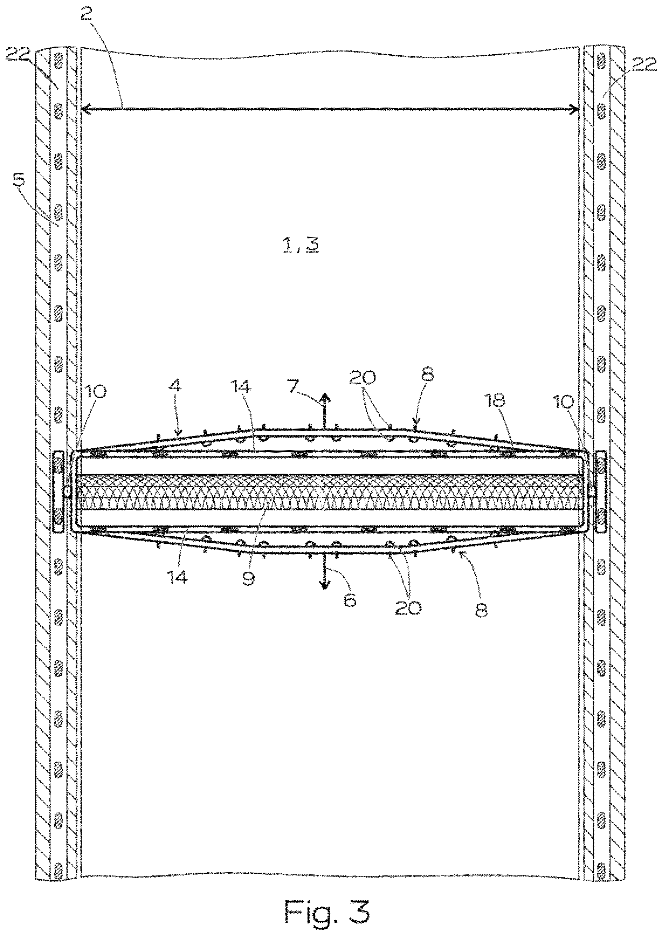

Fig. 3 zeigt eine schematische Darstellung der Funktionsweise einer weiteren Ausführungsform einer Vorrichtung zur Bearbeitung eines Reitplatzes 3. Diese umfasst eine Bearbeitungsvorrichtung 4 und eine Bewegungsvorrichtung 5 zur Bewegung der Bearbeitungsvorrichtung 4 entlang zweier Bearbeitungsrichtungen 6, 7. Zur Bearbeitung des Reitplatzbodens 1 des Reitplatzes 3 weist die Bearbeitungsvorrichtung 4 eine Zinkenanordnung 8 und eine Walzenanordnung 9 auf. In der vorliegenden Ausführungsform ist eine mittig angeordnete Walzenanordnung 9 vorgesehen, die bei der Bewegung der Bearbeitungsvorrichtung 4 entlang beider Bearbeitungsrichtungen 6, 7 im Einsatz bleibt. Um dennoch zu bewirken, dass die Walzenanordnung 9 der Zinkenanordnung 8 in beiden Bearbeitungsrichtungen 6, 7 nachläuft, sind zwei Zinkenanordnungen 8 vorgesehen, die je nach Bearbeitungsrichtung 6, 7 abgesenkt bzw. angehoben werden können. Die Zinkenanordnungen 8 verlaufen beidseitig der mittig angeordneten Walzenanordnung 9. Sowohl die Zinkenanordnungen 8 als auch die Walzenanordnung 9 erstrecken sich entlang der gesamten Breite 2 des Reitplatzbodens 1 bzw. des Reitplatzes 3. Der Verstellmechanismus 10 kann beispielsweise dadurch gebildet sein, dass das Traggestell 18 der Bearbeitungsvorrichtung 4 verkippt wird, sodass je nach Bearbeitungsrichtung 6, 7 die vorgeordnete Zinkenanordnung 8 mit dem Reitplatzboden 1 in Eingriff steht.

Die Bearbeitungsvorrichtung 4 der Fig. 3 umfasst eine Bewässerungsvorrichtung 14.

Eine derartige Bewässerungsvorrichtung 14 kann auch bei den anderen Ausführungsformen der Bearbeitungsvorrichtung 4, insbesondere bei der Bearbeitungsvorrichtung 4 gemäß Fig. 1 bzw. Fig. 2 vorgesehen sein.

Die Bewässerungsvorrichtung 14 verläuft bevorzugt über die gesamte Breite 2 der Bearbeitungsvorrichtung 4 und enthält mehrere Öffnungen zur Ausgabe des Wassers. Insbesondere sind diese Öffnungen bzw. die Bewässerungsvorrichtung 14 derart angeordnet, dass sie auf jenen Bereich des Reitplatzbodens 1 wirken, in dem die Zinkenanordnungen 8 den Reitplatzboden 1 bearbeiten. Dadurch kann ein besonders gleichmäßiger und guter Eintrag des Wassers in den Reitplatzboden 1 bewirkt werden. Zusätzlich kann die Staubbildung bei der Bearbeitung reduziert werden.

Die Zuführung des Wassers zu der mit der Bearbeitungsvorrichtung 4 mitfahrend angebrachten Bewässerungsvorrichtung 14 kann in allen Ausführungsformen gegebenenfalls über herkömmliche Konstruktionen erfolgen. Beispielsweise kann ein Schleppschlauch in ausreichender Länge vorgesehen sein, der eine Verbindung der Bewässerungsvorrichtung 14 mit dem Wasseranschluss unabhängig von der Lage und der Bewegung der Bearbeitungsvorrichtung 4 erlaubt.

In der vorliegenden Ausführungsform geschieht die Zuführung des Wassers über mindestens eine Zuführungsleitung 22, die auf der Seite des Reitplatzes 3 verläuft, wobei die Zuführungsleitung 22 bevorzugt entlang der gesamten Länge 12 des Reitplatzes 3 verläuft. In der vorliegenden Ausführungsform sind beidseitig des Reitplatzes 3 Zuführungsleitungen 22 vorgesehen, wobei in weiterer Folge die Funktion der Zuführungsleitung 22 und der Bewässerungsvorrichtung 14 nur anhand einer Zuführungsleitung 22 beschrieben wird.

Entlang der Zuführungsleitung 22 sind in gewissen Abständen Ventile 23 angeordnet. Diese sind dazu eingerichtet, die Zuführungsleitung 22 geschlossen zu halten. Jedoch umfasst die Bearbeitungsvorrichtung 4 eine Abnahmeglocke 24 für das Wasser. In jenem Bereich, in dem die Abnahmeglocke 24 im Bereich eines Ventils 23 angeordnet ist, wird das Ventil 23 geöffnet und Wasser kann durch die Zuführungsleitung 22, durch das Ventil 23 über die Abnahmeglocke 24 in die Bewässerungsvorrichtung 14 strömen, um in weiterer Folge gleichmäßig auf dem Reitplatzboden 1 ausgegeben werden zu können.

In der vorliegenden Ausführungsform sind zwei Bewässerungsvorrichtungen 14 vorgesehen, die jeweils bei einer der Zinkenanordnungen 8 vorgesehen sind.

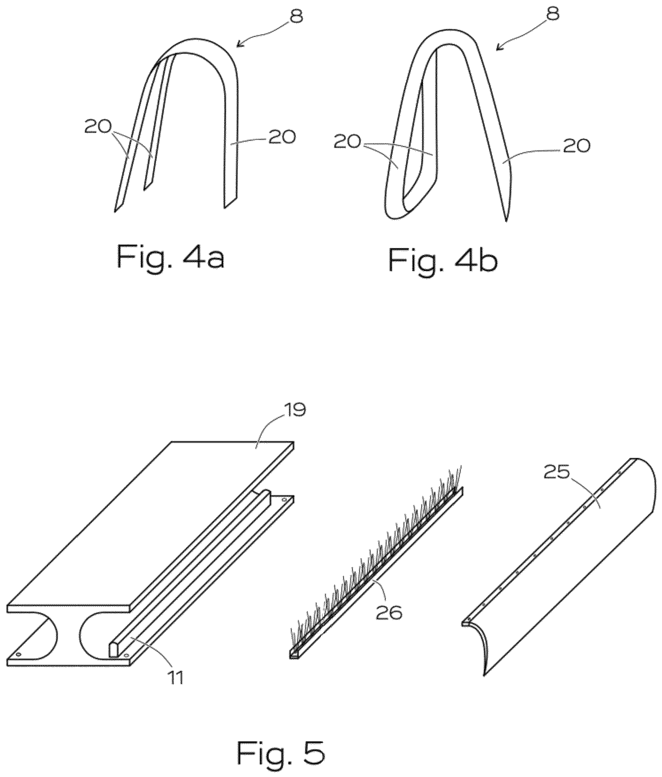

Die Bewegung der Bearbeitungsvorrichtung 4 kann durch eine Bewegungsvorrichtung 5 geschehen, wie sie beispielsweise in den anderen Ausführungsformen beschrieben ist. Die **Figuren 4a und 4b** zeigen zwei unterschiedliche Ausführungen von Teilen einer Zinkenanordnung 8. Fig. 4a zeigt eine Ausführungsform mit drei Zinken 20, wobei bevorzugt der einzeln stehende Zinken 20 entlang der Bearbeitungsrichtung 6, 7 vorne angeordnet ist, und die zwei als Doppelzinken ausgebildeten Zinken 20 hinten. Insbesondere können die Zinken 20 aus einem Y-förmigen Stahlstreifen, beispielsweise aus Federstahl gebildet und U-förmig gebogen sein. Eine Vielzahl derartiger Teile kann zur Bildung einer Zinkenanordnung 8 an einem quer verlaufenden Träger der Zinkenanordnung 8 angebracht sein.

Im Unterschied zur Fig. 4a weist der Teil der Zinkenanordnung 8 der Fig. 4b einen bevorzugt vorne angeordneten einzelnen Zinken 20 und zwei im auskragenden Abschnitt miteinander verbundene nachlaufende Zinken 20 auf. Beispielsweise kann diese Konfiguration durch Biegen eines Stahlblechs erfolgen, wobei das Stahlblech schlaufenförmig und U-förmig gebogen wird. Der einzelne Zinken 20 kann gegebenenfalls durch zwei übereinander liegende Lagen des Stahlblechs gebildet sein. Eine Vielzahl derartiger Teile kann zur Bildung einer Zinkenanordnung 8 an einem quer verlaufenden Träger der Zinkenanordnung 8 angebracht sein.

Fig. 5 zeigt eine schematische Schrägansicht von Komponenten der Bewegungsvorrichtung 5, und insbesondere der Verkleidung 19. Die Verkleidung 19 ist dazu eingerichtet, die Mechanik der Bewegungsvorrichtung 5 zu schützen und dadurch auch die Sicherheit für Bedienpersonen zu erhöhen. Innerhalb der Verkleidung 19 ist in der vorliegenden Ausführungsform die Führungsschiene 11 angeordnet. Auf dieser Führungsschiene 11 kann beispielsweise die Bearbeitungsvorrichtung 4 über ein Führungsrad geführt sein. Innerhalb der Verkleidung 19 ist bevorzugt auch der Seilzug 16 vorgesehen.

Zur weiteren Abdichtung und zur Verkleidung der Mechanik können eine elastisch ausgebildete Schürze 25 und/oder eine Borstenleiste 26 vorgesehen sein. In der Darstellung der Fig. 5 sind eine Schürze 25 und eine Borstenleiste 26 vom feststehenden Teil der Verkleidung 19 abgenommen, um die Teile besser darstellen zu können. Die Schürze 25 wird beispielsweise mit einer Leiste im oberen Bereich der Verkleidung 19 angebracht und ragt mit ihrem elastischen, schürzenförmigen Körper nach unten. Die Borstenleiste 26 kann beispielsweise am unteren Bereich der Verkleidung 19 angebracht sein, sodass die Borsten der Borstenleiste 26 nach oben ragen. Dazwischen kann das Traggestell 18 bzw. die in die Verkleidung 19 eingreifende Komponente der Bearbeitungsvorrichtung 4 hindurch ragen.

## Patentansprüche

1. Vorrichtung zur Bearbeitung eines Reitplatzbodens (1), mit einer sich über die gesamte Breite (2) eines Reitplatzes (3) erstreckenden Bearbeitungsvorrichtung (4), welche ein Traggestell (18) aufweist, das sich über die gesamte Breite (2) des Reitplatzes (3) erstreckt, und mit einer Bewegungsvorrichtung (5), die zur wahlweisen Bewegung der Bearbeitungsvorrichtung (4) entlang zweier entgegengesetzter Bearbeitungsrichtungen (6, 7) eingerichtet ist, wobei die Bearbeitungsvorrichtung (4) mindestens eine sich über die gesamte Breite (2) der Bearbeitungsvorrichtung (4) erstreckende am Traggestell (18) angebrachte Zinkenanordnung (8) zum Lockern des Reitplatzbodens (1) und mindestens eine sich über die gesamte Breite (2) der Bearbeitungsvorrichtung (4) erstreckende am Traggestell (18) angebrachte Walzenanordnung (9) zum Glätten und/oder Andrücken des Reitplatzbodens (1) aufweist, **dadurch gekennzeichnet, dass** die Bewegungsvorrichtung (5) beidseitig der Breite (2) des Reitplatzes (3) ortsfest angeordnete Führungsschienen (11) zur seitlichen Führung und insbesondere zur Parallelführung der Bearbeitungsvorrichtung (4) aufweist, wobei über die Führungsschienen (11) die Bearbeitungsvorrichtung (4) über die gesamte Länge (12) des Reitplatzes (3) führbar ist, wobei ein Verstellmechanismus (10) vorgesehen ist, der die Walzenanordnung (9) in beiden Bearbeitungsrichtungen (6, 7) der Zinkenanordnung (8) nachordnet.

2. Vorrichtung nach Anspruch 1, **dadurch gekennzeichnet,**
- **dass** mindestens eine Zinkenanordnung (8) und zwei höhenverstellbare Walzenanordnungen (9) vorgesehen sind, wobei durch den Verstellmechanismus (10) je nach Bearbeitungsrichtung (6, 7) die der Zinkenanordnung (8) nachgeordnete Walzenanordnung (9) absenkbar ist,
- oder dass zwei Zinkenanordnungen (8) und eine höhenverstellbare Walzenanordnung (9) vorgesehen sind, wobei durch den Verstellmechanismus (10) je nach Bearbeitungsrichtung (6,7) die der Walzenanordnung (9) nachgeordnete Zinkenanordnung (8) abhebbar und die der Walzenanordnung (9) vorgeordnete Zinkenanordnung (8) absenkbar ist,
- oder dass eine Zinkenanordnung (8) und eine Walzenanordnung (9) vorgesehen sind, wobei durch den Verstellmechanismus (10) je nach Bearbeitungsrichtung (6, 7) die Walzenanordnung (9) hinter der Zinkenanordnung (8) absenkbar ist,
- oder dass eine Zinkenanordnung (8) und eine Walzenanordnung (9) vorgesehen sind, wobei durch den Verstellmechanismus (10) je nach Bearbeitungsrichtung (6, 7) die Zinkenanordnung (8) vor der Walzenanordnung (9) absenkbar ist.

3. Vorrichtung nach Anspruch 1 oder 2, **dadurch gekennzeichnet, dass** die Bewegungsvorrichtung (4) eine Antriebsvorrichtung (13) zur Bewegung und insbesondere zur Parallelbewegung der Bearbeitungsvorrichtung (4) entlang zweier entgegengesetzter Bearbeitungsrichtungen (6, 7) aufweist.

4. Vorrichtung nach einem der Ansprüche 1 bis 3, **dadurch gekennzeichnet, dass** die Bewegungsvorrichtung (5) dazu eingerichtet ist, die Bearbeitungsvorrichtung (4) entlang zweier entgegengesetzter Bearbeitungsrichtungen (6, 7) über die gesamte Länge (12) des Reitplatzes (3) parallel hin und zurück zu bewegen.

5. Vorrichtung nach einem der Ansprüche 1 bis 4, **dadurch gekennzeichnet,**
- **dass** an der Bearbeitungsvorrichtung (4) eine mitfahrende Bewässerungsvorrichtung (14) vorgesehen ist, die dazu eingerichtet ist, den Reitplatz (3) über dessen gesamte Breite (2) zu bewässern,
- insbesondere dass die Bewässerungsvorrichtung (14) auf jenen Bereich gerichtet ist, in dem die Zinkenanordnung (8) auf den Reitplatzboden (1) wirkt.

6. Vorrichtung nach Anspruch 5, **dadurch gekennzeichnet,**
- **dass** die Bewässerungsvorrichtung (14) mindestens eine Zuführungsleitung (22) umfasst,
- **dass** die Zuführungsleitung (22) entlang der Bearbeitungsrichtungen (6, 7) verläuft,
- **dass** an der Zuführungsleitung (22) mehrere Ventile (23) angeordnet sind, die dazu eingerichtet sind, die Zuführungsleitung (22) geschlossen zu halten und sie bei Bedarf zu öffnen,
- **dass** die Bearbeitungsvorrichtung (4) eine mitfahrende Abnahmeglocke (24) zur Entnahme von Wasser aus der Zuführungsleitung (22) aufweist,
- und **dass** die Bewässerungsvorrichtung (14) derart ausgestaltet ist, dass die Ventile (23) in jenem Bereich geöffnet sind, in dem die Abnahmeglocke (24) angeordnet ist,
- wobei die Ventile (23) insbesondere durch die Abnahmeglocke (24) öffenbar sind.

7. Vorrichtung nach einem der Ansprüche 1 bis 6, **dadurch gekennzeichnet, dass** die Bearbeitungsvorrichtung (4) über mindestens ein am Reitplatzboden (1) abrollendes Laufrad (15) abgestützt ist, wobei das Laufrad (15) gegebenenfalls durch die Walzenanordnung (9) gebildet ist.

8. Vorrichtung nach einem der Ansprüche 1 bis 7, **dadurch gekennzeichnet, dass** die Bewegungsvorrichtung (5) und insbesondere deren Antriebsvorrichtung (13) einen an der Bearbeitungsvorrichtung (4) angreifenden Seilzug (16) umfasst.

9. Vorrichtung nach einem der Ansprüche 1 bis 8, **dadurch gekennzeichnet, dass** die Bewegungsvorrichtung (5) und insbesondere deren Antriebsvorrichtung (13) einen ortsfest angeordneten Antrieb (17) wie insbesondere einen Elektromotor oder einen Hydraulikantrieb umfasst.

10. Vorrichtung nach einem der Ansprüche 1 bis 9, **dadurch gekennzeichnet, dass** an dem Traggestell (18) zusätzlich der Verstellmechanismus (10), die Bewässerungsvorrichtung (14) und/oder der Seilzug (16) angebracht sind.

## Claims

1. Device for preparing a riding arena surface (1), having a preparation device (4) which extends over the entire width (2) of a riding arena (3) and which has a support frame (18) which extends over the entire width (2) of the riding arena (3), and having a movement device (5) which is set up for selective movement of the preparation device (4) along two opposing working directions (6, 7), wherein the preparation device (4) has at least one tine arrangement (8) mounted on the support frame (18) and extending over the entire width (2) of the preparation device (4) for loosening the riding arena surface (1) and at least one roller arrangement (9) mounted on the support frame (18) and extending over the entire width (2) of the preparation device (4) for smoothing and/or pressing down the riding arena surface (1), **characterized in that** the movement device (5) has guide rails (11) arranged in a fixed position on both sides of the width (2) of the riding arena (3) for lateral guidance and in particular for parallel guidance of the preparation device (4), wherein the preparation device (4) can be guided over the entire length (12) of the riding arena (3) via the guide rails (11), wherein an adjustment mechanism (10) is provided which rearranges the roller arrangement (9) in both preparation directions (6, 7) downstream of the tine arrangement (8).

2. Device according to claim 1, **characterized in that**
- at least one tine arrangement (8) and two height-adjustable roller arrangements (9) are provided, wherein the roller arrangement (9) arranged downstream of the tine arrangement (8) can be lowered by the adjusting mechanism (10) depending on the working direction (6, 7),
- or **in that** two tine arrangements (8) and a height-adjustable roller arrangement (9) are provided, wherein the tine arrangement (8) arranged downstream of the roller arrangement (9) can be raised and the tine arrangement (8) arranged upstream of the roller arrangement (9) can be lowered by the adjusting mechanism (10) depending on the working direction (6, 7),
- or **in that** a tine arrangement (8) and a roller arrangement (9) are provided, wherein the roller arrangement (9) can be lowered behind the tine arrangement (8) by means of the adjusting mechanism (10) depending on the working direction (6, 7),
- or that a tine arrangement (8) and a roller arrangement (9) are provided, wherein the tine arrangement (8) can be lowered in front of the roller arrangement (9) by the adjusting mechanism (10) depending on the working direction (6, 7).

3. Device according to claim 1 or 2, **characterized in that** the movement device (5) has a drive device (13) for movement and in particular for parallel movement of the preparation device (4) along two opposing working directions (6, 7).

4. Device according to one of claims 1 to 3, **characterized in that** the movement device (5) is designed to move the preparation device (4) back and forth in parallel along two opposite working directions (6, 7) over the entire length (12) of the riding arena (3).

5. Device according to one of claims 1 to 4, **characterized in that**
- a travelling irrigation device (14) is provided on the preparation device (4), which is designed to irrigate the riding arena (3) across its entire width (2),
in particular that the irrigation device (14) is directed towards the area in which the tine arrangement (8) acts on the riding arena surface (1).

6. Device according to claim 5, **characterized in that**
- the irrigation device (14) comprises at least one supply line (22),
- the supply line (22) runs along the working directions (6, 7),
- that several valves (23) are arranged on the supply line (22), which are designed to keep the supply line (22) closed and to open it when required,
- that the preparation device (4) has a travelling intake bell (24) for extracting water from the supply line (22),
- and that the irrigation device (14) is designed in such a way that the valves (23) are open in the area in which the extraction bell (24) is arranged,
- whereby the valves (23) can be opened in particular by the extraction bell (24).

7. Device according to one of claims 1 to 6, **characterized in that** the preparation device (4) is supported by at least one running wheel (15) rolling on the riding arena surface (1), wherein the running wheel (15) is optionally formed by the roller arrangement (9).

8. Device according to one of claims 1 to 7, **characterized in that** the movement device (5) and, in particular, its drive device (13) comprises a rope hoist (16) engaging with the preparation device (4).

9. Device according to one of claims 1 to 8, **characterized in that** the movement device (5) and, in particular, its drive device (13) comprises a stationary drive (17), such as, in particular, an electric motor or a hydraulic drive.

10. Device according to one of claims 1 to 9, **characterized in that** the adjustment mechanism (10), the irrigation device (14) and/or the rope hoist (16) are additionally attached to the support frame (18).

## Revendications

1. Dispositif de traitement d'un sol de manège (1); comprenant un dispositif de traitement (4) s'étendant sur toute la largeur (2) d'un manège (3) et comprenant un cadre de support (18) s'étendant sur toute la largeur (2) d'un manège (3); et comprenant un dispositif de déplacement (5) qui est conçu pour déplacer sélectivement le dispositif de traitement (4) le long de deux directions de traitement opposées (6, 7); le dispositif de traitement (4) comportant au moins un ensemble de dents (8) étant fixé au cadre de support (18) et s'étendant sur toute la largeur (2) du dispositif de traitement (4) pour ameublir le sol de manège (1) et au moins un ensemble de rouleaux (9) étant fixé au cadre de support (18) et s'étendant sur toute la largeur (2) du dispositif de traitement (4) pour lisser et/ou presser le sol de manège (1); **caractérisé en ce que** le dispositif de déplacement (5) comporte des rails de guidage (11) disposés de manière fixe des deux côtés de la largeur (2) du manège (3) pour le guidage latéral et en particulier pour le guidage parallèle du dispositif de traitement (4), le dispositif de traitement (4) pouvant être guidé par les rails de guidage (11) sur toute la longueur (12) du manège (3), un mécanisme de réglage (10) étant prévu qui dispose l'ensemble de rouleaux (9) en aval de l'ensemble de dents (8) dans les deux directions de traitement (6, 7).

2. Dispositif selon la revendication 1, **caractérisé en ce**
- **qu'**au moins un ensemble de dents (8) et deux ensembles de rouleaux réglables en hauteur (9) sont prévus, l'ensemble de rouleaux (9) disposé en aval de l'ensemble de dents (8) pouvant être abaissé par le mécanisme de réglage (10) en fonction du sens de traitement (6, 7),
- ou que deux ensembles de dents (8) et un ensemble de rouleaux réglables en hauteur (9) sont prévus, l'ensemble de dents (8) en aval de l'ensemble de rouleaux (9) pouvant être abaissé et l'ensemble de dents (8) en amont de l'ensemble de rouleaux (9) pouvant être relevé par le mécanisme de réglage (10) en fonction du sens de traitement (6, 7),
- ou qu'un ensemble de dents (8) et un ensemble de rouleaux (9) sont prévus, l'ensemble de rouleaux (9) pouvant être abaissé par le mécanisme de réglage (10) derrière l'ensemble de dents (8) en fonction de la direction de traitement (6, 7),
- ou qu'un ensemble de dents (8) et un ensemble de rouleaux (9) sont prévus, l'ensemble de dents (8) pouvant être abaissé par le mécanisme de réglage (10) devant l'ensemble de rouleaux (9) en fonction de la direction de traitement (6, 7).

3. Dispositif selon la revendication 1 ou 2, **caractérisé en ce que** le dispositif de déplacement (5) comporte un dispositif d'entraînement (13) pour le déplacement et en particulier pour le déplacement parallèle du dispositif de traitement (4) le long de deux directions de traitement opposées (6, 7).

4. Dispositif selon l'une des revendications 1 à 3, **caractérisé en ce que** le dispositif de déplacement (5) est conçu pour déplacer le dispositif de traitement (4) en va-et-vient parallèlement le long de deux directions de traitement opposées (6, 7) sur toute la longueur (12) du manège (3).

5. Dispositif selon l'une des revendications 1 à 4, **caractérisé en ce**
- **qu'**un dispositif d'arrosage (14) est prévu sur le dispositif de traitement (4) et se déplace avec lui, qui est conçu pour arroser le manège (3) sur toute sa largeur (2),
- en particulier que le dispositif d'arrosage (14) est dirigé vers la zone dans laquelle l'ensemble de dents (8) agit sur le sol du manège (1).

6. Dispositif selon la revendication 5, caractérisé en
- que le dispositif d'arrosage (14) comprend au moins une conduite d'alimentation (22),
- que la conduite d'alimentation (22) longe les directions de traitement (6, 7),
- qu'une pluralité de vannes (23) sont disposées sur la conduite d'alimentation (22) qui sont conçues pour maintenir la conduite d'alimentation (22) fermée et pour l'ouvrir si nécessaire,
- que le dispositif de traitement (4) comporte une cloche de décharge (24) qui se déplace avec lui pour l'extraction de l'eau de la conduite d'alimentation (22),
- et que le dispositif d'arrosage (14) est conçu de telle sorte que les vannes (23) soient ouvertes dans la zone dans laquelle est disposée la cloche de décharge (24),
- les vannes (23) pouvant être ouvertes notamment par la cloche de décharge (24).

7. Dispositif selon l'une des revendications 1 à 6, **caractérisé en ce que** le dispositif de traitement (4) est supporté par au moins une roue de roulement (15) roulant sur le sol du manège (1), la roue de roulement (15) étant éventuellement formée par l'ensemble de rouleaux (9).

8. Dispositif selon l'une des revendications 1 à 7, **caractérisé en ce que** le dispositif de déplacement (5) et notamment son dispositif d'entraînement (13) comporte un câble de traction (16) agissant sur le dispositif de traitement (4).

9. Dispositif selon l'une des revendications 1 à 8, **caractérisé en ce que** le dispositif de déplacement (5) et notamment son dispositif d'entraînement (13) comprend un entraînement stationnaire (17) tel que notamment un moteur électrique ou un entraînement hydraulique.

10. Dispositif selon l'une des revendications 1 à 9, **caractérisé en ce que** le mécanisme de réglage (10), le dispositif d'arrosage (14) et/ou le câble de traction (16) sont fixés au cadre de support (18) .
